Europäisches Patentamt

European Patent Office

Office européen des brevets

(11) Veröffentlichungsnummer: **0 301 130 B1**

# EUROPÄISCHE PATENTSCHRIFT

(45) Veröffentlichungstag der Patentschrift: **25.03.92**

(21) Anmeldenummer: **87116637.7**

(22) Anmeldetag: **11.11.87**

(51) Int. Cl.⁵: **F16C 35/067**, F16C 33/78

(54) **Wälzlagerung.**

(30) Priorität: **25.07.87 DE 3724752**

(43) Veröffentlichungstag der Anmeldung:
**01.02.89 Patentblatt 89/05**

(45) Bekanntmachung des Hinweises auf die
Patenterteilung:
**25.03.92 Patentblatt 92/13**

(84) Benannte Vertragsstaaten:
**DE FR GB IT**

(56) Entgegenhaltungen:
**GB-A- 1 549 092**
**US-A- 2 536 819**
**US-A- 2 647 808**
**US-A- 2 665 954**

(73) Patentinhaber: **Firma Carl Freudenberg**
**Höhnerweg 2-4**
**W-6940 Weinheim/Bergstrasse(DE)**

(72) Erfinder: **Grassmuck, Volker**
**Ahornstrasse 36**
**W-6940 Weinheim(DE)**
Erfinder: **Jörg, Benno**
**Am Drachenstein 27**
**W-6940 Weinheim(DE)**
Erfinder: **Sommer, Eberhard**
**Goethestrasse 4**
**W-6940 Weinheim-Laudenbach(DE)**

## Beschreibung

Die Erfindung betrifft eine Wälzlagerung nach dem Oberbegriff von Anspruch 1.

Eine Wälzlager der vorgenannten Art ist aus dem deutschen Gebrauchsmuster 17 79 772 bekannt. Der dabei zur Anwendung gelangende Sprengring hat ein kreisförmig begrenztes Profil und ist in eine Nut angepaßten Profils des Außenringes eingeschnappt. Je nach Maßhaltigkeit der einander berührenden Flächen kann sich dabei indessen eine mehr oder weniger große Axialverlagerung des Sprengringes in der Nut ergeben, was wenig befriedigend ist und sich nachteilig auf die Führung des Außenringes auswirken kann. Der Spalt zwischen diesem und dem Innenring ist darüberhinaus durch Dichtscheiben verschlossen, für deren Anpressung an die Flankenflächen unabhängige Andrückmittel vorgesehen sind. Hiermit ist ein besonderer Aufwand verbunden, was aus Kostengründen wenig befriedigend ist. Auch erfordern die selbständigen Andrückmittel einen großen Raum, der häufig nicht verfügbar ist.

Aus der US-A-2,665,954 ist eine Wälzlagerung bekannt, bei der der Außenring durch eine axiale Verspannung, bewirkt durch kegelflächig ausgebildete Sprengringe in entsprechenden Nuten, ortsfest in einer Bohrung gehalten ist. Dabei ist allerdings zu beachten, daß das Lager von außen abgeschmiert werden muß und im Innenraum eines Lagerbocks angeordnet ist, in dessen Gehäuse die Welle berührende Filzringdichtungen angeordnet sind. Neben unbefriedigenden Gebrauchseigenschaften der Filzringdichtungen weist die Wälzlagerung in Verbindung mit dem Lagerbock eine große Ausdehnung in axialer Richtung auf, wodurch ihre Verwendbarkeit in erheblichem Maße eingeschränkt ist.

Der Erfindung liegt die Aufgabe zugrunde, eine Wälzlagerung der vorgenannten Art derart weiterzuentwickeln, daß sich bei vereinfachtem, platzsparendem Aufbau eine präzise Führung des Außenringes ergibt und zugleich eine feste Anpressung der Dichtscheibe zumindest an die Flankenfläche des Außenringes.

Diese Aufgabe wird erfindungsgemäß mit den kennzeichnenden Merkmalen des Anspruchs 1 gelöst. Auf vorteilhafte Ausgestaltungen nehmen die Ansprüche 2 bis 4 Bezug.

Bei der erfindungsgemäßen Wälzlagerung weist der Sprengring im eingebauten Zustand eine der Flankenfläche des Außenringes zugewandte Stützfläche auf, die eben ausgebildet und in radialer Richtung nach innen verlängert ist und den Spalt zwischen dem Außen- und dem Innenring zumindest teilweise überbrückt.

Die spezifische Flächenpressung der zwischen dem Sprengring und dem Außenring des Wälzlagers angeordneten Dichtscheibe aus polymerem Werkstoff ist dadurch deutlich reduziert, was die Größe der anpressungsbedingten Deformierung reduziert und es vereinfacht, eine gleichbleibende Zuordnung der Dichtscheibe zu dem abzudichtenden Spalt zwischen dem Außenring und dem Innenring zu erzielen. Durch die Überbrückung des Spaltes zwischen dem Außen und dem Innenring kann eine unerwünschte Ausweichbewegung der Dichtscheibe in axialer Richtung nach außen ausgeschlossen werden.

Der Sprengring kann im eingebauten Zustand einerseits auf der von der Flankenfläche des Außenringes abgewandten Seite der Nut auf mindestens einer Kegelfläche abgestützt sein und andererseits einen radialen Abstand von dem Nutgrund der Nut aufweisen.

Die zwischen dem Sprengring und dem Außenring angeordnete Dichtscheibe wird hierdurch unabhängig von gegebenenfalls vorhandenen maßlichen Abweichungen fest an dessen Flankenfläche angepreßt, was neben einer ausgezeichneten Abdichtung in diesem Bereich eine starre Fixierung des Außenringes des Wälzlagers auf dem Boden der aufnehmenden Gehäusebohrung gewährleistet. Diese ist durch die Einleitung von Schwingungen oder hohen Drehzahlen in keiner Weise gefährdet. Eine Verwendung der erfindungsgemäßen Wälzlagerung auf dem Gebiet des Maschinenbaues oder der Kfz-Technik ist daher ohne weiteres möglich.

Die den Sprengring in axialer Richtung abstützende Kegelfläche kann einen Bestandteil der Nut, des Kegelringes oder von beiden bilden. Die Herstellung ist in den erstgenannten Fällen besonders einfach, während im letztgenannten Fall der Vorteil resultiert, daß sich eine besonders geringe, spezifische Flächenpressung im Bereich der einander berührenden Kegelflächen ergibt. Für die dauerhafte Radialbeweglichkeit des Sprengringes in der aufnehmenden Nut ist das von großer Bedeutung. Verschleiß im Bereich der einander berührenden Kegelflächen ist nicht ohne weiteres zu befürchten, insbesondere wenn diese einen untereinander identischen Kegelwinkel haben, beispielsweise einen solchen zwischen 60 und 80°. Scharfkantige Ecken und Kanten sollten im Bereich der aufeinandergleitenden Flächen des Sprengringes und der Nut nicht vorhanden sein, und zwar auch nicht im Bereich der radialen Auftrennung des Sprengringes. Diese ist vorhanden, um dem Sprengring die notwendige radiale Beweglichkeit zu verleihen.

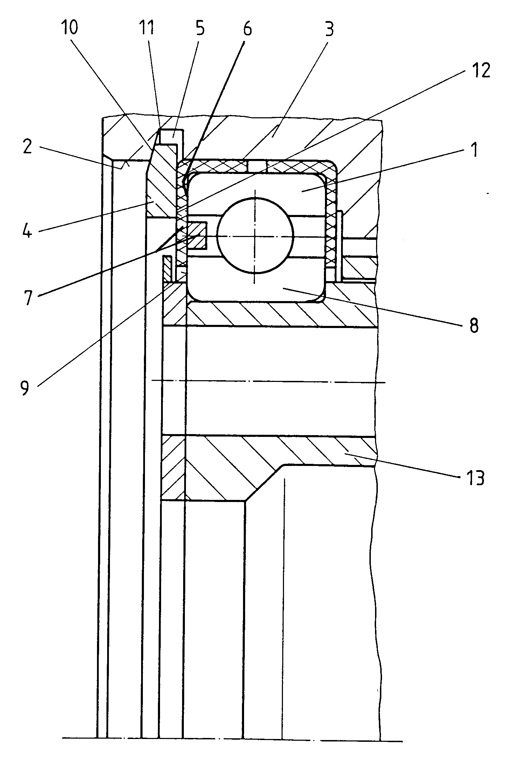

Der Gegenstand der vorliegenden Erfindung wird nachfolgend anhand der als Anlage beigefügten Zeichnung weiter erläutert. Die Zeichnung zeigt in halbgeschnittener Darstellung teilweise eine Anordnung, bei der zwei um eine gemeinsame Achse rotierende Maschinenteile relativ verdrehbar durch eine Wälzlagerung aufeinander abgestützt sind.

Das darin enthaltene Wälzlager ist als Kugellager ausgebildet und umfaßt den Außenring 1 und den Innenring 8. Der Außenring 1 ist durch zwei gegeneinander geöffnete Schutzkappen aus polymerem Werkstoff gegenüber dem äußeren 3 der beiden Maschinenteile thermisch isoliert. Die Schutzkappen haben jeweils ein winkelförmiges Profil, dessen beide Schenkel den Außenring 1 einerseits auf der in radialer Richtung nach außen weisenden Fläche und andererseits im Bereich der Flankenfläche übergreifen.

Der letztgenannte Schenkel ist soweit in radialer Richtung nach innen verlängert, daß der Spalt zwischen dem Außen- und dem Innenring 1, 8 des Kugellagers völlig überdeckt ist und sich zusätzlich eine gegenseitige axiale Berührung zwischen dem Schenkel und der axialen Flankenfläche des Innenringes 8 ergibt, wodurch die Dichtscheibe (7) gebildet wird. Beide Schutzkappen sind spiegelbildlich ausgebildet. Sie bestehen aus Polyetherketon oder Duroplasten wie Phenolharz oder Kautschuk mit hoher Shorehärte und umschließen den Außenring 1 des Wälzlagers im Bereich von dessen beiden Flankenflächen. Die rechte der beiden Schutzkappen liegt dabei zugleich mit ihrer axialen Außenseite am Boden der aufnehmenden Bohrung 2 des äußeren 3 der beiden durch das Kugellager verbundenen Maschinenteile an.

Die Bohrung 2 weist zusätzlich links des Außenringes 1 eine umlaufende Nut 5 auf, deren von dem Außenring 1 abgewandte Begrenzungsfläche durch eine Kegelfläche 10 gebildet ist. Diese steht in der dargestellten Weise in Eingriff mit einer Kegelfläche 10 des Sprengringes 4. Dieser ist so dimensioniert und mit dem Profil und der Anordungsposition der Nut 5 abgestimmt, daß sich unter normalen Betriebsbedingungen eine der gezeigten Darstellung entsprechende, axiale Anpressung der Dichtscheibe 7 an die ihm zugewandte Flankenfläche 6 des Außenringes 1 des Kugellagers ergibt. Diese beruht maßgeblich darauf, daß der Sprengring 4 aus Federstahl besteht und herstellungsbedingt einen Außendurchmesser aufweist, der in etwa mit demjenigen der aufnehmenden Nut 5 übereinstimmt. Der Sprengring 4 ist an einer Stelle seines Umfanges mit einer radialen Durchtrennung versehen, die in Umfangsrichtung soweit bemessen ist, daß eine Durchmesserreduzierung auf ein Maß unterhalb des Durchmessers der Bohrung 2 möglich ist. Der Sprengring 4 kann dadurch in axialer Richtung in die Bohrung eingefügt werden und versucht bei Erreichen der Nut 5 seine ursprüngliche Größe wieder anzunehmen, was durch die gegenseitige Berührung seiner Kegelfläche und der Kegelfläche 10 der Nut nur bedingt gelingt.

Hierdurch ergibt sich eine latente axiale Verspannung zwischen dem Sprengring 4, der Dichtscheibe 7 und dem Außenring 1 des Wälzlagers, wodurch nicht nur die Dichtscheibe fest an den Außenring des Wälzlagers 1 angepreßt wird, sondern zugleich dieses an den gegenüberliegenden, nach innen weisenden Schenkel der dort angeordneten Schutzkappe, welche unmittelbar am Boden der aufnehmenden Bohrung 2 anliegt. Unabhängig von eventuell vorhandenen, maßlichen Abweichungen irgendeines der vorhandenen Teile ergibt sich dadurch eine starre Fixierung des Außenringes 1 des Wälzlagers auf eine bestimmte, axiale Position. Diese ist auch durch die Einleitung von höchsten Drehzahlen nicht gefährdet. Letztere unterstützen vielmehr die auswärts gerichtete Federbewegung des Sprengringes 4 und damit die Erzielung einer festen axialen Einspannung des Außenringes 1 des Wälzlagers.

Die Stützfläche 12 des Sprengringes übergreift die Dichtscheibe 7 bis in den Bereich der radialen Erstreckung des Spaltes zwischen dem Außenring 1 und dem Innenring 8 des Wälzlagers. Die Anpressung der Dichtscheibe 7 auch an die zugeordnete Flankenfläche 9 des Innenringes 8 des Wälzlagers wird dadurch begünstigt und somit auch in diesem Bereich eine gute Abdichtwirkung erzielt.

**Patentansprüche**

1. Wälzlagerung, bei der der Außenring (1) in der Bohrung (2) eines umlaufenden Maschinenteiles (3) gelagert und durch einen Sprengring (4) gegen axiale Verschiebung gesichert ist, wobei der Sprengring (4) in eine umlaufende Nut (5) der Bohrung (2) eingeschnappt und zwischen dem Sprengring (4) und der Flankenfläche (6) des Außenringes (1) eine Dichtscheibe (7) aus polymerem Werkstoff angeordnet ist, die den Spalt zwischen dem Außen- (1) und dem Innenring (8) überbrückt und unter einer elastischen Vorspannung an der Flankenfläche (9) des Innenringes (8) anliegt, dadurch gekennzeichnet, daß der Sprengring (4) im eingebauten Zustand eine der Flankenfläche (6) des Außenringes (1) zugewandte Stützfläche (12) aufweist, die eben ausgebildet und in radialer Richtung nach innen verlängert ist und den Spalt zwischen dem Außen- (1) und dem Innenring (8) zumindest teilweise überbrückt.

2. Wälzlagerung nach Anspruch 1, dadurch gekennzeichnet, daß der Sprengring (4) im eingebauten Zustand einerseits auf der von der Flankenfläche (6) des Außenringes (1) abgewandten Seite der Nut (5) auf mindestens einer Kegelfläche (10) abgestützt ist und andererseits einen radialen Abstand von dem Nutgrund (11) der Nut (5) aufweist.

**3.** Wälzlagerung nach Anspruch 2, dadurch gekennzeichnet, daß die Kegelfläche (10) als eine Begrenzungsfläche der Nut 5 ausgebildet ist.

**4.** Wälzlagerung nach Anspruch 2 bis 3, dadurch gekennzeichnet, daß die Kegelfläche (10) als eine Begrenzungsfläche des Sprengringes (4) ausgebildet ist.

## Claims

**1.** A rolling-bearing arrangement in which the outer race (1) is mounted in the bore (2) of an encircling machine part (3) and is secured against axial displacement by a snap ring (4), the snap ring (4) being snapped into an encircling groove (5) of the bore (2), and a sealing disc (7) of a polymer material being arranged between the snap ring (4) and the flank surface (6) of the outer race (1), which sealing disc (7) bridges the gap between the outer (1) and inner race (8) and bears under elastic preloading against the flank surface (9) of the inner race (8), characterised in that the snap ring (4), in the installed state, has a supporting surface (12) which faces the flank surface (6) of the outer race (1), is of planar design and is extended to the inside in the radial direction and at least partly bridges the gap between the outer (1) and inner race (8).

**2.** A rolling-bearing arrangement according to claim 1, characterised in that the snap ring (4), in the installed state, is on the one hand supported on at least one tapered surface (10) on the side of the groove (5) remote from the flank surface (6) of the outer race (1) and is on the other hand at a radial distance from the root (11) of the groove (5).

**3.** A rolling-bearing arrangement according to claim 2, characterised in that the tapered surface (10) is designed as a boundary surface of the groove (5).

**4.** A rolling-bearing arrangement according to claims 2 to 3, characterised in that the tapered surface (10) is designed as a boundary surface of the snap ring (4).

## Revendications

**1.** Montage sur palier à roulement, dans lequel la bague extérieure (1) est logée dans l'alésage (2) d'un organe tournant (3) d'une machine et est bloquée en translation radiale par un anneau élastique (4), ledit anneau élastique (4) étant serti dans une gorge circonférentielle de l'alésage (2) et une rondelle d'étanchéité (7) en matériau polymère étant disposée entre ledit anneau (4) et la surface latérale (6) de la bague extérieure (1), ladite rondelle pontant l'espace existant entre la bague extérieure (1) et intérieure (8) et s'appuyant sur la surface latérale (9) de la bague intérieure (8) sous l'effet d'une précontrainte élastique, caractérisé en ce que l'anneau élastique (4) a, dans l'état monté, une surface d'appui (12) tournée vers la surface latérale (6) de la bague extérieure (1), ladite surface d'appui ayant une forme plane et étant prolongée en direction radiale vers l'intérieur, pontant au moins partiellement l'espace entre la bague extérieure (1) et intérieure (8).

**2.** Montage sur palier à roulement selon la revendication 1, caractérisé en ce que dans l'état monté l'anneau élastique (4) prend d'un côté appui sur au moins une surface conique (10) sur la surface de la gorge (5) opposée à la surface latérale (6) de la bague extérieure (1) et présente de l'autre côté un jeu radial par rapport au fond (11) de la gorge (5).

**3.** Montage sur palier selon la revendication 2, caractérisé en ce que la surface conique (10) forme une surface périphérique de la gorge (5).

**4.** Montage sur palier selon la revendication 2 ou 3, caractérisé en ce que, la surface conique (10) forme une surface périphérique de l'anneau élastique (4).